# FASCICULE DE BREVET EUROPEEN

(11) **EP 2 909 491 B1**
(45) Date de publication et mention de la délivrance du brevet: **11.04.2018**
(21) Numéro de dépôt: 13785566.4
(22) Date de dépôt: 15.10.2013
(51) Int. Cl.: F16C 23/04, F16C 33/18, F16C 33/20, F16C 33/28, B29C 70/86

(54) **ELEMENT D'ARTICULATION AUTOLUBRIFIANT RÉALISÉ À PARTIR DE MATÉRIAU COMPOSITE ET FONCTIONNANT SOUS FORTES CHARGES EN REGIME DYNAMIQUE**
SELBSTSCHMIERENDES GELENKELEMENT AUS EINEM VERBUNDSTOFF MIT BETRIEB UNTER HOHEN DYNAMISCHEN LASTEN
SELF-LUBRICATING ARTICULATION ELEMENT MADE FROM A COMPOSITE MATERIAL AND OPERATING UNDER HIGH DYNAMIC LOADINGS

(30) Priorité: 22.10.2012 FR 1260033
(43) Date de publication de la demande: 26.08.2015
(73) Titulaire: H.E.F., 42160 Andrezieux-Boutheon (FR)
(72) Inventeur: MASSE, Emmanuel, 42110 Feurs (FR); BLANDENET, Olivier, 38240 Meylan (FR); MAURIN-PERRIER, Philippe, 42680 Saint Marcellin En Forez (FR)
(74) Mandataire: Cabinet Laurent & Charras
(86) Numéro de dépôt international: PCT/FR2013/052459
(87) Numéro de publication internationale: WO 2014/064367

(56) Documents cités:
- WO-A1-79/00752
- WO-A2-2006/037083
- FR-A5- 2 117 062
- US-A- 2 835 539
- US-A- 5 431 500

## Description

L'invention se rattache au secteur technique des articulations autolubrifiantes.

L'invention trouve une application avantageuse pour tous les types d'articulation nécessitant un fonctionnement sans graisse c'est-à-dire en fonctionnement autolubrifiant et travaillant sous fortes charges en régime dynamique.

Le but recherché selon l'invention est d'obtenir une articulation auto lubrifiante réalisée en polymère homogène sur toute son épaisseur sans substrat de renfort et fonctionnant sous des fortes charges, par exemple, supérieures à 60 Mpa en dynamique.

Selon l'état de la technique ce type d'articulation polymère composite ne donne pas totalement satisfaction en présentant une faible tenue à la charge et des risques de fluage et de délaminage sous charge dynamique y compris pour des charges inférieures à 60 Mpa. Par exemple, selon l'état de la technique, l'élément d'articulation peut être obtenu à partir d'un enroulement d'un tissu synthétique mélangé avec une résine thermodurcissable ou thermoplastique de type époxy, polyester ou autres, l'épaisseur du tissu étant de l'ordre de 300 µm. Le tissu se présente sous forme de bandes réalisées selon plusieurs couches pour atteindre l'épaisseur souhaitée, par exemple 3 couches.

L'invention s'est fixée pour but de remédier à ces inconvénients de manière simple, sûre, efficace et rationnelle.

Par ailleurs le document WO 79/00752 présente un coussinet de palier lisse correspondant au préambule de la revendication 1, celui-ci étant fabriqué à partir de fibres imprégnées de résine et comprenant un composé résistant à l'usure.

Le problème que se propose de résoudre l'invention est d'obtenir une articulation de type polymère apte à fonctionner sous de fortes charges en régime dynamique, supérieures à 60 Mpa.

Selon l'invention, l'élément de l'articulation est réalisé sur toute son épaisseur à partir d'un enroulement d'un tissu de faible épaisseur comprise entre 20 µm et 150 µm et de préférence entre 20 µm et 130 µm et mélangé avec une résine comprenant des charges, ledit tissu se présentant sous forme de bandes de largeur comprise entre 5 mm et 200 mm, lesdites bandes étant croisées selon plusieurs couches selon la technique de l'enroulement filamentaire.

Il résulte de ces caractéristiques une meilleure homogénéité avec l'utilisation de bandes plus fines et une meilleure résistance aux efforts tangentiels de frottement grâce à un croissement des couches de tissu composant le matériau.

Il en résulte également une meilleure tenue à la charge dynamique due au croisement des bandes et une meilleure tenue à la charge statique due à une meilleur homogénéité du matériau.

Avantageusement, l'angle de croisure est compris entre 10° et 90° et de préférence entre 30° et 86°.

Suivant d'autres caractéristiques, la résine est du type époxy, vinylester, polyester, phénolique, polyimid ..., tandis que les charges sont de type PTFE, Mos2, graphite.

A noter que les charges représentent entre 5 et 70 % du volume.

L'invention est exposée ci-après plus en détail à l'aide des dessins annexés dans lesquels :
- La fig. 1 montre l'enroulement d'un tissu de faible épaisseur selon les caractéristiques de l'invention ;
- La fig. 2 est une vue à caractère purement schématique montrant l'enroulement de tissu selon l'état antérieur de la technique pour obtenir une épaisseur déterminée ;
- La fig. 3 est une vue semblable à la figure 2 montrant l'enroulement de tissu selon l'invention pour obtenir la même épaisseur déterminée.

Selon l'invention, l'élément d'articulation autolubrifiant tel qu'une bague par exemple, est réalisé à partir d'un enroulement d'un tissu synthétique de faible épaisseur comprise entre 20 µm et 150 µm et avantageusement entre 20 µm et 130 µm.

Le tissu, qui se présente sous forme de bandes, est mélangé avec une résine de type époxy, vinylester, polyester, phénolique, polyimid...

Cette résine comprend des charges de type PTFE, MoS2, graphite ..., de l'ordre de 5 à 70 % du volume. Le but recherché est d'obtenir un produit homogène sur toute son épaisseur.

Les bandes de tissu ont une largeur comprise entre 5 mm et 200 mm et sont enroulées sur un mandrin de diamètre déterminé, selon la technique de l'enroulement filamentaire.

Les bandes sont enroulées et croisées selon plusieurs couches, l'angle de croisure étant compris entre 10° et 90° et avantageusement entre 30° et 86°.

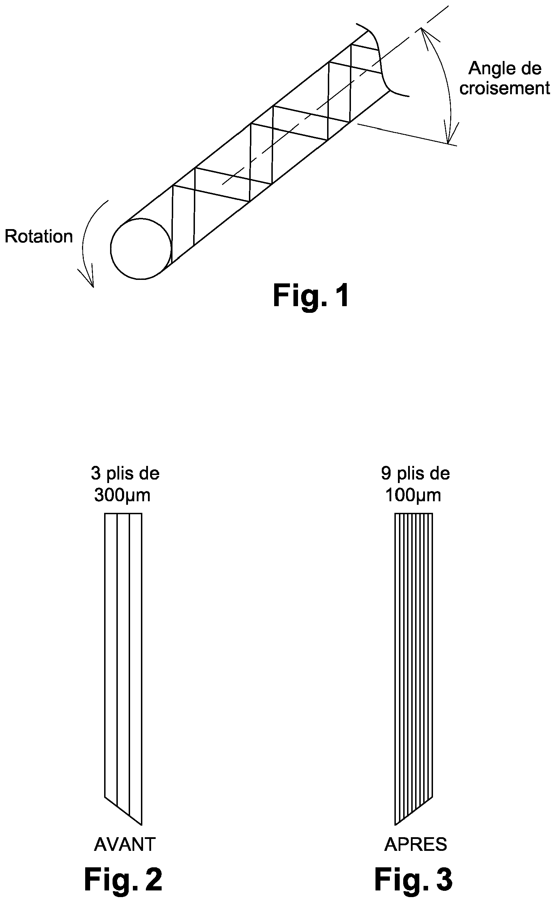

On renvoie à la figure 3 qui montre un enroulement sous forme de 9 plis de 100 µm en opposition à un enroulement selon l'état de la technique sous forme de 3 plis de 300 µm.

A noter que le tissu destiné à être mélangé avec la résine peut être constitué par un taffetas, un satin, un sergé ou une toile sans exclure d'autres contextures.

On renvoie aux essais ci-après dans le cas d'une articulation sous forme d'une bague composite auto lubrifiante recevant un axe de caractéristique 16 NC 6 CT Ra : 04.
- Diamètre de l'arbre : 30 mm
- Largeur de l'organe de guidage : 20 mm
- Mouvement : rotation alternée sur 90°
- Pression calculée en surface projetée : 80 Mpa
- Vitesse de glissement : 8 mm/s
- Coefficient de frottement > 0,25

Les résultats des essais sont les suivants :
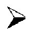 ***Etat antérieur de la technique***
   - Enroulement à 90°
   - Largeur de la bande de tissu utilisée : 1200 mm
   - Epaisseur du tissu : 0.30 mm
   - Diamètre extérieur de la bague à obtenir : 36 mm
   - Usure obtenue > à 0.5 mm
   - Coefficient de frottement < à 0.2 mm
   - Nombre de cycles : 30 000.
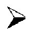 ***Selon les caractéristiques de l'invention :***
   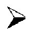 Enroulement croisé
   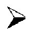 Largeur de la bande de tissu utilisée : 30 mm
   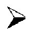 Epaisseur du tissu : 0.10 mm
   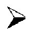 Diamètre extérieur de la bague à obtenir : 36 mm
   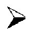 Usure obtenue : 0.4 mm
   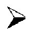 Coefficient de frottement < à 0.1 mm
   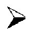 Nombre de cycles : 365 000.

## Revendications

1. Elément d'articulation auto lubrifiant fonctionnant sous fortes charges en régime dynamique et étant homogène sur toute son épaisseur **caractérisé en ce qu'**il est réalisé sur toute son épaisseur à partir d'un enroulement d'un tissu de faible épaisseur comprise entre 20 µm et 150 µm et mélangé avec une résine comprenant des charges, ledit tissu se présentant sous forme de bandes de largeur comprise entre 5 mm et 200 mm, lesdites bandes étant croisées selon plusieurs couches par enroulement filamentaire.

2. Elément selon la revendication 1 **caractérisé en ce que** l'épaisseur du tissu est comprise entre 20 µm et 130 µm.

3. Elément selon la revendication 1, **caractérisé en ce que** l'angle de croisure est compris entre 10° et 90°.

4. Elément selon la revendication 1, **caractérisé en ce que** l'angle de croisure est compris entre 30° et 86°.

5. Elément selon la revendication 1, **caractérisé en ce que** le tissu est du type synthétique.

6. Elément selon la revendication 1, caractérisé en que la résine est du type époxy, vinylester, polyester, phénolique ou polyimide.

7. Elément selon la revendication 1, **caractérisé en ce que** les charges sont de type PTFE, MoS2, graphite.

8. Elément selon la revendication 7, **caractérisé en ce que** les charges représentent entre 5 et 70 % du volume.

## Patentansprüche

1. Selbstschmierendes Scharnierelement, das unter hohen dynamischen Lasten arbeitet und über seine gesamte Dicke homogen ist, **dadurch gekennzeichnet, dass** es über seine gesamte Dicke aus einem Strang eines Gewebes mit einer geringen Dicke im Bereich zwischen 20 µm und 150 µm hergestellt und mit einem Füllstoffe umfassenden Harz gemischt ist, wobei das Gewebe in Form von Streifen mit einer Breite zwischen 5 mm und 200 mm vorliegt, wobei diese Streifen durch Filamentwicklung in mehreren Schichten gekreuzt sind.

2. Element gemäß Anspruch 1, **dadurch gekennzeichnet, dass** die Dicke des Gewebes zwischen 20 µm und 130 µm beträgt.

3. Element gemäß Anspruch 1, **dadurch gekennzeichnet, dass** der Kreuzungswinkel zwischen 10° und 90° beträgt.

4. Element gemäß Anspruch 1, **dadurch gekennzeichnet, dass** der Kreuzungswinkel zwischen 30° und 86° beträgt.

5. Element gemäß Anspruch 1, **dadurch gekennzeichnet, dass** das Gewebe von synthetischer Art ist.

6. Element gemäß Anspruch 1, **dadurch gekennzeichnet, dass** das Harz vom Epoxid-, Vinylester-, Polyester-, phenolischen oder Polyimid-Typ ist.

7. Element gemäß Anspruch 1, **dadurch gekennzeichnet, dass** die Füllstoffe vom PTFE-, MoS2-, Graphit-Typ sind.

8. Element gemäß Anspruch 7, **dadurch gekennzeichnet, dass** die Füllstoffe zwischen 5 und 70 Vol.-% ausmachen.

## Claims

1. A self-lubricating joint element operating under high loads in dynamic state, and being homogenous throughout its thickness **characterized in that** it is formed throughout its thickness from the winding of a fabric of small thickness ranging between 20 µm and 150 µm and mixed with a resin comprising fillers, said fabric appearing in the form of strips having a width ranging between 5 mm and 200 mm, said strips being crossed in several layers by filament winding.

2. The element of claim 1, **characterized in that** the fabric thickness ranges between 20 µm and 130 µm.

3. The element of claim 1, **characterized in that** the crossing angle ranges between 10° and 90°.

4. The element of claim 1, **characterized in that** the crossing angle ranges between 30° and 86°.

5. The element of claim 1, **characterized in that** the fabric is of synthetic type.

6. The element of claim 1, **characterized in that** the resin is of epoxy, ester vinyl, polyester, phenolic, or polyimide type.

7. The element of claim 1, **characterized in that** the fillers are of PTFE, MoS2, or graphite type.

8. The element of claim 7, **characterized in that** the fillers amount to between 5 and 70% of the volume.
